(19) **Europäisches Patentamt**
**European Patent Office**
**Office européen des brevets**

(11) **EP 1 826 722 B1**

(12) **EUROPEAN PATENT SPECIFICATION**

(45) Date of publication and mention
of the grant of the patent:
**06.08.2008 Bulletin 2008/32**

(51) Int Cl.:
***G06T 5/30*** (2006.01)

(21) Application number: **06110323.0**

(22) Date of filing: **23.02.2006**

(54) **Computer system and method for processing a digital image**

Computersystem und -verfahren zum Verarbeiten eines digitalen Bildes

Système et procédé informatique pour le traitement d'une image numérique

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**29.08.2007 Bulletin 2007/35**

(73) Proprietor: **MeVis Research GmbH**
**28359 Bremen (DE)**

(72) Inventor: **Hahn, Dr. Horst Karl**
**28209 Bremen (DE)**

(74) Representative: **Richardt, Markus Albert**
**Leergasse 11**
**65343 Eltville am Rhein (DE)**

(56) References cited:
**US-A1- 2003 068 074**

• **ADAMS R ET AL: "Seeded region growing" IEEE TRANSACTIONS ON PATTERN ANALYSIS AND MACHINE INTELLIGENCE, IEEE SERVICE CENTER, LOS ALAMITOS, CA, US, vol. 16, no. 6, June 1994 (1994-06), pages 641-647, XP002215479 ISSN: 0162-8828**

**Description**

**Field of the invention**

The present invention relates to the field of image processing, and more particularly without limitation to the field of segmentation of digital images, such as for the purpose of bone removal.

**Background and prior art**

Image segmentation is a crucial task in visualisation and quantification based on digital medical image data. US Patent Application Number 20030068074A1 and corresponding US Patent 6,985,612 show a method for segmentation of digital data being represented by picture element data for the purposes of visualisation, segmentation and quantification, such as determining the volume of a segment. The method comprises the steps of performing a watershed transformation of the digital image by applying a watershed transformation method on the picture element data to provide one or more basins and post-processing by processing the picture element data belonging to at least one of the basins.

Another image segmentation method is region growing. Region growing is a segmentation method used to extract a connected region of acceptably similar voxels from a scene. The similarity criteria are, in general, determined by a range of intensity values or by well-defined edges in the image. A seeded region growing requires an initialisation seed, usually provided by the operator, to be placed within the target region of interest. The algorithm then examines neighbouring voxels, one at a time, adding those that fall within the acceptance criteria. In addition, region growing can also be sensitive to noise, and the segmentation of multiple regions requires at least one seed for each region to be classified. One of the applications of region growing is the classification of isolated tumours or lesions.

One application of image segmentation is bone segmentation and more particularly bone removal, e.g. bone removal in CT angiographic (CTA) images.

Existing approaches to bone removal cover automated and interactive techniques. Fully automated approaches vary both with respect to their speed and quality; often, only fair results are obtained. A simple interactive technique is described in by Alyassin and Avinash, where the user can adjust global thresholds in order to separate vessels from osseous structures [Alyassin AM and Avinash GB. Semiautomatic bone removal technique from CT angiography data. In: Medical Imaging: Image Processing, Proc. SPIE 4322: 1273-1283, 2001]. Their work is simple, based on fast morphological and filtering operations that are typical for bone segmentation [Fiebich M, Straus CM, Sehgal V, Renger BC, Doi K, and Hoffmann KR. Automatic bone segmentation technique for CT angiographic studies. J Comput Assist Tomogr 23(1): 155-161, Jan/Feb 1999]. Interactive techniques, such as described in [Moore EA, Grieve JP, and Jäger HR. Robust processing of intracranial CT angiograms for 3D volume rendering. European Radiology 11(1): 137-141, Jan 2001; Kang Y, Engelke K, and Kalender WA. A new accurate and precise 3-D segmentation method for skeletal structures in volumetric CT data. IEEE Trans Med Imaging 22(5): 586-598, May 2003], often provide a higher specificity at a lower speed.

Moreover, specialized techniques provide a good segmentation quality for a restricted range of applications, such as intracranial [Moore EA, Grieve JP, and Jäger HR. Robust processing of intracranial CT angiograms for 3D volume rendering. European Radiology 11(1): 137-141, Jan 2001], knee, and femur segmentation [Kang Y, Engelke K, and Kalender WA. A new accurate and precise 3-D segmentation method for skeletal structures in volumetric CT data. IEEE Trans Med Imaging 22(5): 586-598, May 2003]

A problem of this and other image processing methods is that the complete digital image needs to be loaded into the main memory of the computer system in order to perform the image processing within an acceptable processing time. However, the working memory of typical personal computers is not sufficient for loading a complete high resolution digital image. For example, a three-dimensional digital image of 512 x 512 x 1600 voxels corresponds to about 800 MB of data.

The number of digitally stored medical images and the amount of information stored in each image both are steadily increasing, thus increasing the importance of robust and fast segmentation methods at the same time. Robustness refers to the ability of the method to: (i) work in presence of image disturbance, (ii) with a low failure rate, and (iii) to work for a wide range of

**Summary of the invention**

The present invention as defined by the appended claims provides a method of processing a digital image being represented by picture element data, each picture element data having at least one scalar value, such as a grey value. Initially the picture element data is stored on a mass storage device, such as a magnetic or optical data carrier. A sub-set of the picture elements is selected using the scalar values as a selection criterion. Depending on the intended image processing to be performed, scalar values that are above or below a pre-defined threshold value are selected.

As a consequence the initial data volume of the picture element data is reduced such that it can be held in the random access memory of a computer system.

The scalar value can be a single grey value per picture element. As an alternative to a single gray value, multiple scalar values can be stored in the picture element, such as color information, e.g. RGB values, dual energy CT, multispectral MR, multisequence MR, or dual-echo MR scalar values.

If the picture element has more than one scalar value, one of the scalar values can be used for comparison with the threshold value. Alternatively a combination, e.g. a linear combination, of the scalar values or a sub-set of the scalar values of the picture element can be calculated for the purpose of comparing the resultant combined scalar value with the threshold value.

In order to preserve some topological information a picture element table is generated that has a table entry for each of the picture elements of the sub-set. Each table entry has the scalar value of its respective picture element and a table entry field for pointers to its neighbouring picture elements. The table is sorted using the scalar values as a sorting criterion. A consecutive image processing step is performed using the picture element table and not the complete image data stored on the mass storage device.

This has the advantage that a personal computer can be used for performing the image processing. Another advantage is that the generation of the picture element table can be performed as a pre-processing operation before the image processing step. This can reduce the image processing time that is experienced by a user.

In accordance with a preferred embodiment of the invention a histogram of the scalar values is provided. The number of picture elements having scalar values above or below a given threshold level is determined using the histogram. This number corresponds to a certain memory requirement. If the available free memory is not sufficient the threshold level is incremented or decremented, respectively, to reduce the number of the picture elements to be loaded into the memory.

In accordance with a further preferred embodiment of the invention a buffer is used for loading neighbouring layers of the digital image for selecting of the sub-set of the picture elements and determining the neighbouring picture elements. The picture element data sets of the layers have a table index identifier that identifies the respective picture element data as being comprised in the picture element table or not.

In accordance with a further preferred embodiment of the invention a watershed transformation method is applied on the picture element table.

As a result of the application of a watershed transformation directly on the picture element data contained in the picture element table one or more basins are identified in the digital image to be segmented. These basins do not necessarily correspond to the anatomical structures to be segmented.

Therefore a post-processing of the watershed transformed digital image is performed. By means of the post-processing a basin of interest is reduced to the anatomical structure of interest to be segmented.

In accordance with a preferred embodiment of the invention this is accomplished by applying a transfer function directly onto the picture element data corresponding to the basin of interest.

In accordance with a further preferred embodiment of the invention the scalar value is determined for each picture element data by applying a transformation function. The transformation function takes only into account the picture element data to be transformed but not--for example--neighbouring picture element data. In this preferred embodiment the watershed transformation is then applied onto the scalar values of the transformed picture element data.

In accordance with a further preferred embodiment of the invention the digital image to be segmented is a medical image, such, as a computer tomographic (CT), a magnetic resonance (MR) a T1-weighted MR image or any other kind of digital radiologic image.

In accordance with a further preferred embodiment of the present invention the image data is three-dimensional or four-dimensional. In the latter case the fourth dimension is time.

It is a particular advantage of this embodiment that it becomes possible to visualize movements of body organs, such as a pulsing heart, or the flow of body fluids over time.

In accordance with a further preferred embodiment of the invention the post-processing is used to transform the transparency of picture elements in a region between a first tissue type of interest and a second tissue type in accordance with a transfer function in order to gradually increase the transparency of those picture elements. This way a structure of a second tissue type surrounding or enveloping a structure of interest of a first tissue type becomes transparent so that the structure of interest of the first tissue type is visualized. In accordance with a particular embodiment of the invention a four-dimensional colour space having a transparency coordinate, such as the RGBA colour coordinates, is used.

In accordance with a further preferred embodiment of the invention the volume of an anatomical structure is measured by histogram analysis of the picture Embodiments of the present invention are useful for applications such as:

    a. skull stripping,

b. brain segmentation with estimation of brain volumes,

c. segmentation of the cardiac ventricles in cardiac images,

d. cardiac segmentation with estimation of cardiac ventricle volumes,

e. segmentation of the cerebral ventricles, i.e. the intra-cerebral CSF spaces, and to

f. segmentation of the cerebral ventricles with accurate ventricular volumetry,

g. bone segmentation in CT images,

h. segmentation and accurate volumetry of lung nodules and similar tumours.

i. vessel segmentation in CT angiographic (CTA) images.

Similar to thresholding and region growing techniques, the WT partitions an image into regions, so-called basins. However, there is not a specific grey value, e.g. a threshold, that determines the basin borders. Watersheds, being the borders of the basins resulting from the WT, are throughout constructed at connected local image maxima (so-called crest lines). Connected local image minima (so-called valleys), can be transformed into crest lines via grey level inversion. The WT is thus robust against image disturbance, such as low-frequency contrast non-uniformity as well as image noise, that does not change positions of local image extrema.

Prior to image segmentation, it is a goal of image acquisition to produce a contrast between the structure of interest and adjacent structures. In presence of image non-uniformity, threshold based methods will fail. In case of steep image gradients within the structure of interest or of low gradients at their edges, gradient based methods will be likely to give erroneous results. Both problems can be solved if the WT is directly applied to the original image data: Image non-uniformity usually consists of low frequency signals in the space domain and does not change the position of local image minima or maxima; and there are no restrictions regarding the image gradients when applying the WT, as long as the structure of interest is connected.

In contrast to the WT applied to the gradient image, the present approach does not yield the object borders directly. Rather, the direct application of the WT is combined with a grey scale based post-processing. This can be a segmentation step to find object borders after the separation step; another possibility is the direct rendering (e.g., in 2D or 3D) of the result, e.g. using transfer functions; finally, a histogram analysis can be performed after the WT, e.g., in order to assess accurate object volumes taking into account partial volume effects, noise and image non-uniformity.

## Connectivity

A basic assumption regarding the objects of interest is their connectivity. Two points of a grey level image are connected, if a path of adjacent voxels exists between them that is at least as bright as the darker one of the two points. When interpreting the image intensity as height information, the emerging landscape consists of several hills corresponding to bright image areas and valleys corresponding to dark image areas. According to the above definition of connectivity, two regions are disconnected, if they are separated by a valley, otherwise they are connected.

In other words, applying the WT to the original data solves a difficult part in image segmentation, i.e. separating the structure of interest from neighbouring structures that exhibit similar image intensities. The separation is performed at the most likely line between the two structures. E.g., if two dark regions are grouped on two opposing sides of a slightly brighter line, this line is the place where the watershed will be constructed, when applying the WT to the original image data. The two regions will be attributed to two different basins.

For the segmentation of three-dimensional objects, the three-dimensional WT is applied directly to the original image data. Three-dimensional WT refers to a generalization of the two-dimensional WT; a three-dimensional structuring element takes into account at least the six nearest neighbours of a voxel in order to assess its connectivity. Similarly, we propose to use a four-dimensional WT for the segmentation of a series of three-dimensional images, taking into account the eight nearest neighbours (two in each dimension, the fourth dimension being regarded as time). This can be extended to arbitrary dimensions, by adding the two respective nearest neighbours to the connectivity rule.

For multispectral data, where more than one scalar value is available for each spatial position, much as it is the case in colour images (there usually three channels or, resp., spectra are used), a scalar function may be derived by combination of these channels. This scalar function then serves as input data for the WT.

Such derived images can also be computed from a single channel, e.g. from a single 3D image from a CT scanner. One example is the gradient function image. More basic examples are any kind of grey scale transformations (or transfer functions). These can, e.g., aim towards assigning the darkest grey values to the object of interest, such that surrounding tissues are brighter and the places where watersheds are preferably constructed. Finally, the input image can be morphologically transformed, e.g. by erosion, dilation, closing, or opening in order to suppress thin structures.

## Controlling Oversegmentation--Preflooding and Markers

The major problem of the WT is oversegmentation, i.e. the tendency to produce too many basins. The invention provides two methods to overcome this problem. First, preflooding can be applied to merge small basins with adjacent basins before constructing watersheds. Second, basins can be marked individually in order to determine the number of basins.

The preflooding concept uses a measure of depth of a certain basin. As long as this depth is greater than a specific preflooding height, the basin will be separated from neighbouring deeper basins via the construction of watersheds. If not, it will be merged with the neighbouring basin of highest priority. Priority is, e.g., equivalent to absolute basin depth.

In order to account for contrast variations at different image areas, the preflooding height can be a function of the local image characteristic, such as brightness or variance. This function may depend from one ore more parameters.

In order to realize a system, where the parameters of the preflooding concept may be chosen interactively in real-time, a hierarchical WT is preferred. For each merging procedure, e.g., the depth of the merged basins can be measured relatively to the lowest point on the separating crest line (the merging point, where the watershed would be constructed). These merging procedures can be stored in their order of occurrence or hierarchy in a list without merging any basin at this pre processing step. Afterwards, for an actual choice of parameters, processing this list (in combination with the segmented image containing elementary basins) suffices to perform the desired WT with preflooding.

Another possibility to control oversegmentation is using markers. An arbitrary number of different markers can be assigned to arbitrary voxels prior to the transformation (or, in case of a hierarchical approach, prior to processing the list containing the merging information). Then, two basins are only merged, if they are not marked differently. When merging a marked basin with an unmarked one, the latter will also receive the marker of the former. After the WT, all voxels will be assigned to one of the markers--i.e. the number of different regions is determined by the number of different markers. Point markers applied to single voxels are suitable for most cases.

## Automation

The preflooding concept is dependent on one parameter (constant preflooding height) or a few parameters (preflooding height as function of local image characteristics). If the problem is known, the proper (set of) parameter(s) can be determined automatically. The number of basins is monotonically decreasing with increasing preflooding height whereas its sizes are increasing. This provides the basis for robustness. The segmentation result does not change continuously with varying preflooding height but, depending on the image quality, a more or-less broad range of proper values exists. The range of proper preflooding heights can be easily found as the first plateau (regarding the size of the largest emerging basin) larger than a certain threshold (the brain can be assumed to be larger than, e.g., 500 ml for adults).

On the other hand, the basin of interest may be found automatically using some basin features regarding size, shape, position, mean and minimum image intensity, etc. For the skull stripping problem, e.g., the brain is often the largest existing basin, as soon as the proper preflooding height is found.

However, automation should not be the ultimate goal if large variations in the shape or anatomy are expected. An interactive segmentation, e.g. with the above mentioned marker concept, is often a better choice for pathological or abnormal cases.

## Volumetry

An application of the present invention is volumetry, i.e. the reliable estimation of the volume of structures of interest. The invention evaluates to separate objects from neighbouring objects, including some of the intermediate tissue (that is brighter or darker than the two objects); most object borders are included in the segmentation results including the unsharp region or the partial volume region.

Furthermore, for volumetry purposes it is desirable to include into the segmentation as much as possible of the adjacent structures showing a different grey scale, since, e.g., a histogram analysis that aims to account for partial volume effects profits from the knowledge of all tissue types involved. Typically, such histogram analysis is very robust and can be performed fully automatically.

In general, after applying the WT, it is essential to preserve the original image information of the basin of interest.

If parts of a connected structure should be quantified, cutting tools (like planes, discs, or hyper-planes in 4D), are used to partition (separate) this structure.

In order to reduce noise and artefacts, or to increase or decrease the amount of information in an image, resampling and interpolation of the original image data can be applied prior to the WT.

Dynamic volumetry, i.e. comparison of the volume of objects at different time points, can be performed by applying the results of the WT of one time point to all time points, whereas the grey scale based post-processing (in particular, histogram analysis) could be performed independently for each individual time point.

The invention is particularly advantageous in that it enables to realize a computer system to perform segmentation which features:

a. Robustness even against considerable image non-uniformity, image noise, other image disturbances, and low image resolution;

b. High speed realizations with computational costs that are approximately of the order of the number of picture elements;

c. Interactive segmentation with small interaction costs and time (few point markers on the whole 3D or 4D volume often suffice to separate the structure of interest from all other structures that exhibit the same grey scale characteristic);

d. High quality and reproducibility of derived measures, such as object volumes;

e. No geometrical assumptions, respectively anatomical a priori knowledge, except the connectivity of structures of interest;

f. Openness to the integration of geometrical models and anatomical assumptions;

g. Fully automatic segmentation and interactive semi-automatic segmentation;

h. Accurate volumetry, since object borders are included in the segmentation.

It is to be noted that the application of the invention to a digital image provides one or more basins. One or more of such basins are further processed in a post-processing step. In some applications the basin or the basins are regarded as the segmentation result. This is the case for visualization where the post-processing is performed to transform the transparency of a region surrounding a region of interest within the basin. This is also the case for volumetry applications. However, in other applications of the invention the basin or basins which are initially identified are the basis for further segmentation. Further segmentation of a basin can be performed by means of any prior art scale-scale based segmentation method.

It is to be noted that the scope of the present invention is not restricted to image processing methods that use a watershed transformation. Rather the present invention can be used for other image processing methods that require some but not the complete topological image information, such as region growing algorithms.

**Brief description of the drawings**

In the following preferred embodiments of the invention are described in greater detail by way of example only making reference to the drawings in which:

Figure 1      Shows an exemplary structure of a picture element data set,

Figure 2      Is a block diagram of an embodiment of a computer system,

Figure 3      Is illustrative of a method for determining a sub-set of the picture elements in order to reduce the memory requirement,

Figure 4      Is a flowchart that illustrates the generation of a picture element table,

Figure 5      Is illustrative of an exemplary image processing procedure performed on the picture element table,

Figure 6      Is a further preferred embodiment of a computer system for segmentation of a digital image,

Figure 7        Is illustrative of a basin-basin merging rule using preflooding,

Figure 8        Is illustrative of a basin-basin merging rule being based on markers,

Figure 9        Is a schematic example for an application of an embodiment of the present invention for segmentation and visualisation by means of a transfer function,

Figure 10       Is a diagram being illustrative of the algorithmic behaviour of the watershed transformation with increasing preflooding height relating the number of resulting catchment basins and the size of the largest basin to the relative preflooding height.

Figure 11       Is illustrative of an example for a model based histogram analysis for the purpose of volume measurement.

**Detailed Description of the Preferred Embodiments**

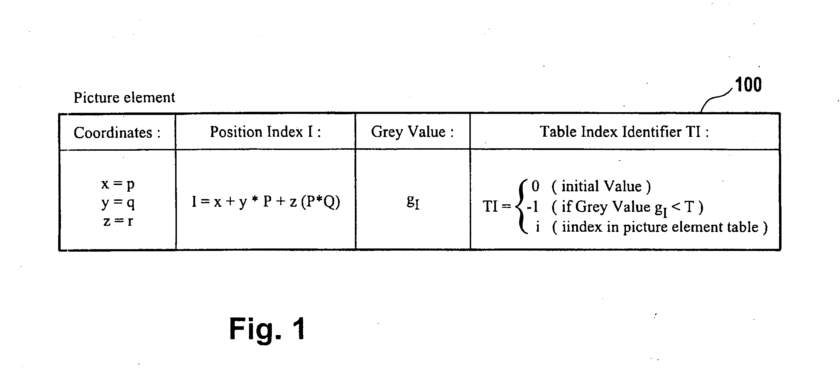

Figure 1 shows a picture element dataset 100 of one picture element of a digital image. The present invention is not restricted with respect to the kind of image data and is broadly applicable to a variety of classes of image data. It is particularly useful for medical image data, in particular digital image data acquired from computer tomographic images, magnetic resonance images and T1-weighted magnetic resonance images. Further, it can be advantageously employed to other radiologic images.

Typically, a digital image data comprises a large number of picture elements, i.e. pixels for two-dimensional images and voxels for three-dimensional images. In addition there are also four-dimensional images where the fourth dimension is time. Such four-dimensional images are acquired for observation of ongoing processes like the flow of a fluid, the volume change of a structure of interest, or the pulsation of a human heart. In the latter case a time series of three-dimensional image data is acquired and stored in a four-dimensional array. In the following the term 'picture element' will be used to designate a pixel, a voxel or a voxel at a specific time depending on the kind of digital image data considered.

The exemplary picture element data set 100 shown in figure 1 belongs to a three-dimensional digital image. Using a Cartesian coordinate system having an X, Y and Z axis, the picture element represented by the picture element dataset 100 has the spatial coordinates x = p, y = q and z = r, i.e. it is the picture element (p, q) of the r-th image layer of the digital image. The spatial position of the picture element within the digital image is unequivocally identified by its position index I

$$I(x, y, z) = x + y * P + z * P * Q,$$

Where P is the number of picture elements in x direction and Q is the number of picture elements in y direction of each of the R layers of the digital image. Preferably only the position index I is stored in the picture element dataset 100 but not the coordinate values p, q and r. This has the advantage that the three-dimensional position of the picture element is unequivocally identified by the single integer index I.

In addition at least one scalar value, e.g. the $g_l$ of the picture element is stored in the picture element dataset 100. As an alternative to a single gray value, multiple scalar values can be stored in the picture element, such as color information, e.g. RGB values, dual energy CT, multispectral MR, multisequence MR, or dual-echo MR scalar values.

The table index identifier TI of the picture element dataset 100 is initially set to 0. After the digital image has been preprocessed for generation of a picture element table the value of TI is either - 1 or the index value i of the respective entry in the picture element table. An entry in the picture element table is only created for the picture element dataset 100 if the grey value $g_l$ is above the threshold value T. In this case the table index identifier TI is set to be equal to the index i of the respective entry in the picture element table. If the contrary is the case TI is set to be -1 or another suitable marker that is outside the index space of the picture element table.

If the picture element has more than one scalar value, one of the scalar values can be used for comparison with the threshold value. Alternatively a combination, e.g. a linear combination, of the scalar values or a sub-set of the scalar values of the picture element can be calculated for the purpose of comparing the resultant combined scalar value with the threshold value.

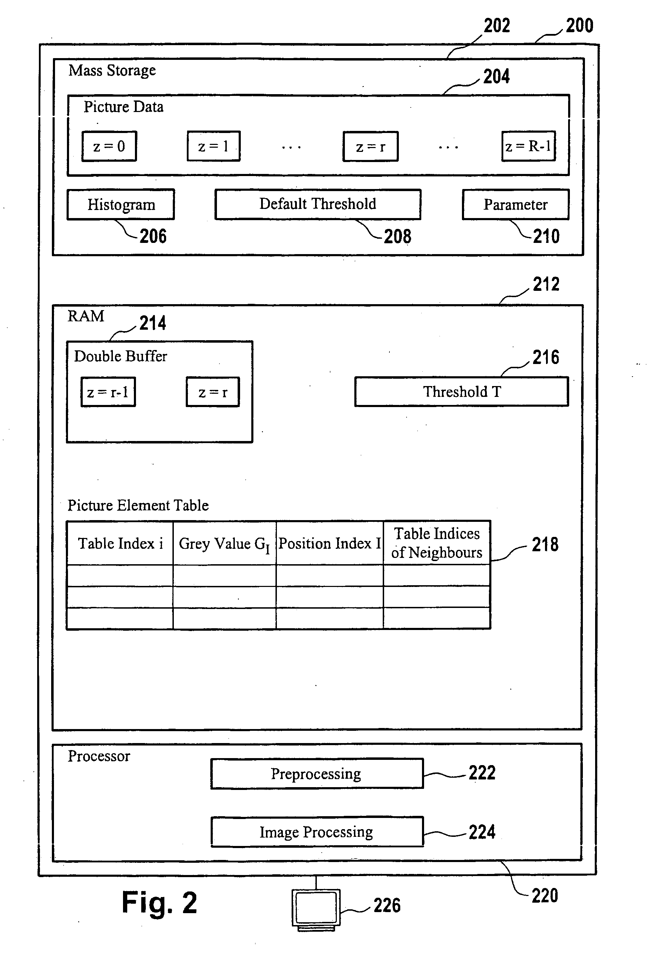

Figure 2 shows a computer system 200. The computer system 200 has a mass storage device 202 such as a disc drive for reading magnetic or optical data storage media. Picture data 204 of a three-dimensional digital image is stored on the mass storage device 202. The picture data 204 is stored in two-dimensional image layers ranging from the z-coordinates z = 0 to R - 1. The individual picture elements of each layer are stored in the form of picture element datasets 100 as shown in figure 1:

Further, a histogram 206 that provides the distribution of the grey values of the picture elements contained in the picture data 204 is stored on the mass storage device 202. In addition a default threshold 208 and a parameter 210 are stored on mass storage device 202.

The computer system 200 has a random access memory (RAM) 212. The RAM 212 has a memory region for providing a double buffer 214 that can contain at least two complete image layers of the digital image. In addition the RAM 212 has a storage location 216 for storing a threshold T and storage region for storing the picture element table 218.

The picture element table 218 has a table entry for each picture element of the picture data 204 that has a grey value above the threshold T. Each table entry contains the grey value $g_l$ of the respective picture element that has position index I. In addition the entry has an entry field for entering pointers to nearest neighbours of the respective picture element.

The table indices i of the picture element table 218 can be used as such pointers. The table index i of each entry does not necessarily need to be stored in the table entry as the index value i can be given by the line number of the line of the picture element table 218 where the entry is stored.

The computer system 200 has a processor 220 for running a preprocessing program 222 and an image processing program 224 that uses the results of the pre-processing performed by the preprocessing program 222. A monitor 226 is coupled to the computer system 200 for visualisation of the results of the image processing and for user interaction.

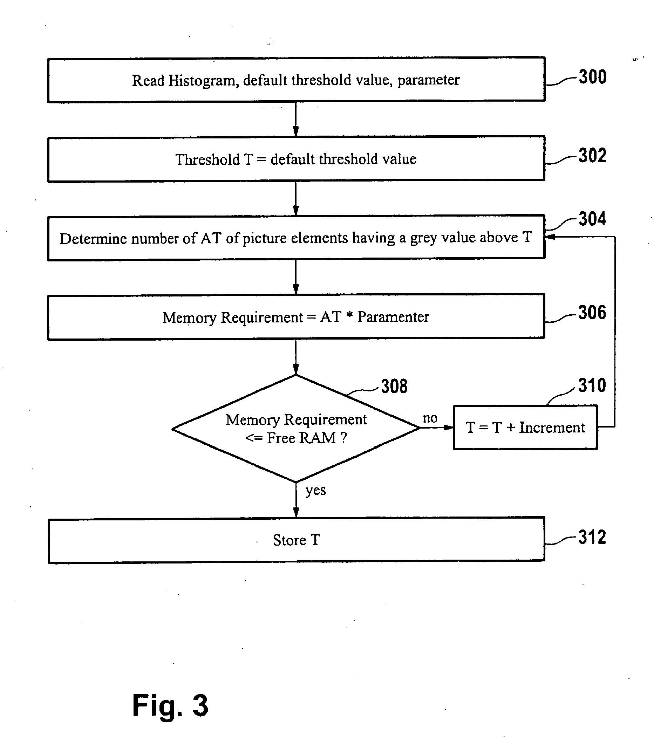

In operation the histogram 206, the default threshold 208 and the parameter 210 are read from the mass storage device 202 into RAM 212 by preprocessing program 222. The preprocessing program 222 determines the number of picture elements that are above the default threshold level from the histogram 206. The resultant number of picture elements is multiplied by the parameter 210 which provides at least an estimate for the memory space in the RAM 212 that is required for the picture element table 218. If the memory requirement exceeds the available memory space in the RAM 212 the threshold level is incremented and the procedure is performed again. This procedure will be explained in more detail below with reference to figure 3.

The resultant threshold value is stored as threshold T in storage location 216. The picture element table 218 is initially empty as well as the double buffer 214.

The layers of the picture data 204 are successively loaded into the double buffer 214, e.g. starting with the image plane at z = 0. The current image plane z = r that is loaded in the double buffer 214 is examined regarding the grey values of its picture elements. For a picture element I that has a grey value $g_l$ is above the threshold T a table entry is created in picture element table 218. The corresponding table index i is stored in the respective picture element dataset 100 of the considered picture element, i.e. TI = i. If the grey value $g_l$ is below the threshold T the table index identifier TI is set to -1 .

The table entry in the picture element table 218 that is created for a picture element that has a grey value $g_l$ above the threshold T contains the grey value $g_l$ and the position index I of the picture element as well as the table indices of the nearest neighbours of the picture element, if any.

In the embodiment considered here only neighbours that directly border the picture element are considered. For example, the processing of the picture elements of the layer z = r is performed in a nested loop, where the inner loop loops from x-positions 0 to P -1 , and the outer loop loops from y positions 0 to Q -1.

In this instance neighbours of the picture element for which the table entry is created are identified by checking the picture element datasets 100 of picture elements of layer z = r that have already been processed. If such a picture element dataset 100 has a table index identifier TI that is not equal to - 1 this table index identifier TI is a table index that is stored in the table entry field for the table indices of the neighbours.

In addition the picture element dataset 100 of the layer z = r - 1 that is the nearest neighbour of the considered picture elements in - z direction is examined for the presence of a table index identifier T1 that is not equal to -1. If such a table index identifier TI is found it is also stored in the table entry field for the table indices of the neighbours.

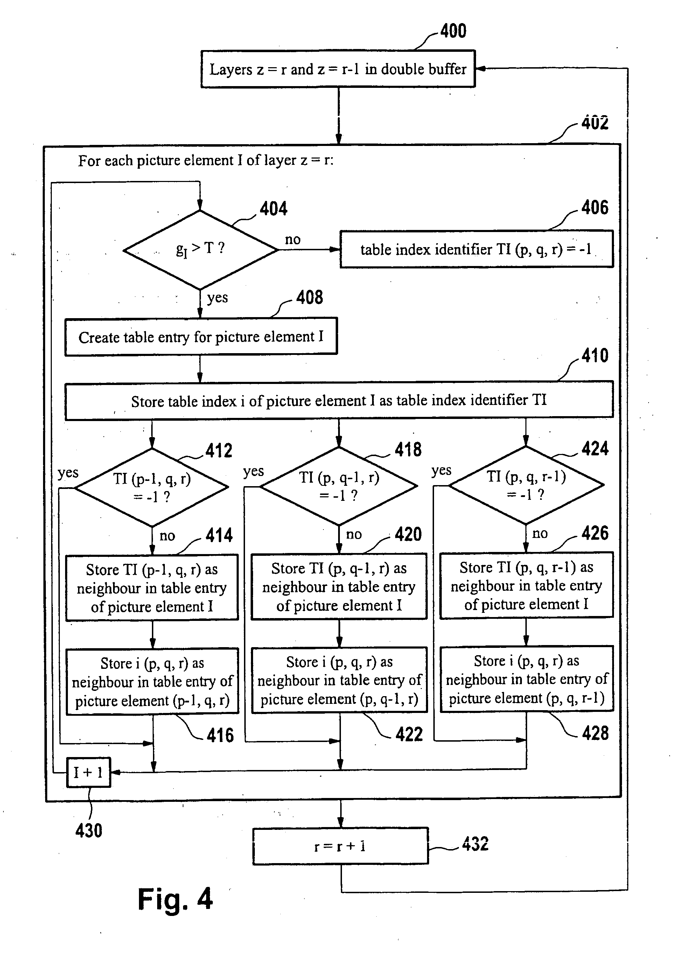

In the preferred embodiment considered here this means that a maximum number of three table indices is initially stored in the table entry field as only picture elements that have already been processed can be considered. In order to complete the identification process of the nearest neighbours the table index i of a newly-created table entry is added to the list of table indices of neighbours of the table entry representing a picture element data that has been identified as containing a table index identifier TI that is not equal to - 1 . This procedure of identifying nearest neighbours is advantageous as it is sufficient to 'look back' to picture elements that have already been processed with reduces the overall processing time required for the preprocessing. A more detailed embodiment of this procedure will be described below with referenced to fig.4.

Depending on the implementation the picture element table 218 is sorted by the grey values during its creation process or after all picture elements have been processed. Preferably the table entries are sorted in ascending order, i.e. the darkest picture element having the lowest grey value is the first picture element $p_{i=0}$ in the picture element table 218 and the brightest picture element having the highest grey value is the last picture element $p_{i=n-1}$ in the picture element table 218.

After the preprocessing has been completed the image processing program 224 can be started in order to perform an image transformation on the digital image as represented in the picture element table 218.

Figure 3 shows a flowchart that illustrates a method for determining the threshold T stored in the storage location 216 as shown in the embodiment of figure 2. In step 300 the histogram 206, the default threshold 208 and the parameter 210 (cf. figure 2) are entered. The threshold T is initially set to be equal to the default threshold value (step 203). In step 304 the number AT of picture elements contained in the picture data 204 that have grey values above T are determined using the histogram. In step 306 the RAM memory requirement for storing the picture element table 218 is calculated as the number AT times the parameter.

In step 308 it is determined whether there is enough free RAM memory space for this memory requirement. If this is not the case the threshold T is incremented (step 310) and the control goes back to step 304. If the contrary is the case the final value of T is stored in step 312.

Figure 4 shows a more detailed embodiment of a method for generating the picture element table 218 (cf. figure 2).

In step 400 neighbouring layers z = r and z = r - 1 of the digital image are loaded into a double buffer (cf. double buffer 214 of figure 2). The following step 402 is performed for each picture element I of the current layer Z = r starting with the picture element having the lowest position index I in the current layer;

In step 404 it is determined whether the grey value $g_l$ of the picture element I is above or equal to the threshold T. If this is not the case the table index identifier TI of the picture element I in its picture element dataset 100 is set to be equal - 1 (step 406).

If the contrary is true the control goes to step 408 where a table entry in the picture element table 218 is created for the picture element I. In the following step 410 the table index i of the newly created table entry for the picture element I is stored as the table index identifier TI in the picture element dataset 100 of the picture element I in the double buffer. Next the nearest neighbours are identified. The identification of nearest neighbours in x direction is performed as follows:

In step 412 the table index identifier TI of the neighbouring picture element in -x direction is considered. If this table index identifier TI is not equal to - 1 the control goes to step 414 where TI is stored as a table index in the table entry field for the neighbours of the considered picture element I that is located at (p, q, r). In step 416 the table index i of the newly created table entry is stored in the entry field for the neighbours of the table entry of the neighbouring picture element that has been identified in step 414 as the considered picture element I is also a neighbour of the picture element identified in step 414.

If it has turned out that in step 412 that the table index identifier TI is in fact equal to - 1 the steps 414 and 416 are skipped.

The determination of nearest neighbours in y-direction are performed by the analogous steps 418, 420, 422 and for the neighbours in z-direction by the steps 424, 426 and 428.

From steps 416, 422, 428 the control goes to step 430 where the position index I is incremented in order to go to the next picture element of the current layer z = r. After all picture elements of the current layer have been processed the control goes to step 432 where r is incremented. As a consequence the subsequent layer is loaded into the double buffer as the new current layer while the previous current layer is still kept in the double buffer. This procedure is performed repetitively until all picture elements of the digital image have been processed which provides the complete picture element table 218.

It is to be noted that more remote neighbours can also be included in the processing using the same approach as explained with respect to figure 4. This can require a larger buffer that can hold more than two image planes.

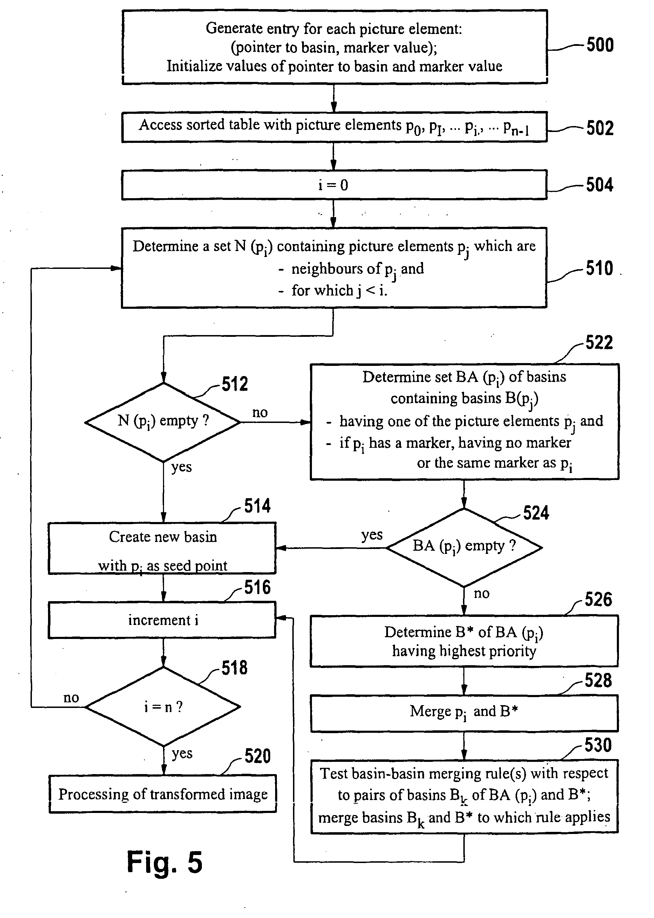

Figure 5 illustrates an example for an image processing step performed by the image processing program 224 (cf. figure 2). In step 500 a data entry is generated for each picture element contained in the picture element table 218. The data entry comprises a pointer to a basin and a marker value. Both the pointer to a basin and the marker value are initialised to be equal to 0. This indicates that no pointer to a basin and no marker value are present in the data entry. It is to be noted that the 'marker value' and the data entry is optional and is only used if a user can interactively mark individual picture elements or if automatic marking is used. In step 502 the picture element table 218 that contains the sorted picture elements $p_i$ in ascending grey value order is accessed and the table index i is initialised to be 0 in step 504 in order to start the image processing with the topmost entry of the picture element table 218 (cf. figure 2).

In step 510 a set of picture elements $N(p_i)$ is determined. All picture elements $p_j$ contained in the set $N(p_i)$ are neighbours of the picture element $p_i$ in the original digital image and the grey values of those neighbouring picture elements $p_j$ are lower than the grey value of the considered picture element $p_i$. In other words the indices j of the picture elements $p_j$ is lower than the index i of the considered picture element $p_i$.

For the first picture element $p_0$ in the sequence stored in the picture element table the set $N(p_i)$ is empty as - by definition - there are no picture elements $p_j$ for which j < i. However, for other picture elements $p_i$ with i > 0 picture elements $p_j$ in the neighbourhood of $p_i$ which have a lower grey value than $p_i$ can be found.

In step 512 it is determined whether the set N is empty or not. If the set N is empty the control goes over to step 514. In step 514 a new basin is created with the picture element $p_i$ as a seed point. In step 516 the index i is incremented and in step 518 it is determined if i equals n.

If this is not the case the control goes back to step 510 with the incremented value of the index i for processing of the consecutive picture element of the sequence as given by the sorted picture element table.

If i equals n the control goes to step 520 as all picture elements $p_i$ of the sequence have been processed. In step 520 a step of post-processing of the watershed transformed image is then performed. The kind of post-processing step or steps depends on the desired application such as visualization, segmentation or quantification, e.g. measurement of volumes. The post-processing performed in step 520 will be explained below in greater detail.

In case the set $N(p_i)$ is not empty the control goes from 512 to 522. In step 522 a set of basins $BA(p_i)$ is determined. This set BA contains the basins $B(p_j)$. A basin $B(p_j)$ is a basin having a picture element $p_j$ of the set N. In other words the basins for all picture elements $p_j$ contained in the set N are determined. Those basins $B(p_j)$ form the set $BA(p_i)$.

In addition - if the marker concept is used - it is tested, if a basin $B(p_j)$ has a marker. If the basin $B(p_j)$ has no marker or the same marker as the considered picture element $p_i$ or if the considered picture element $p_i$ has no marker the corresponding basin $B(p_j)$ is defined to be a member of the set $BA(p_i)$. If the contrary is the case the basin $B(p_j)$ does not form part of the set $BA(p_i)$.

In other words, step 522 serves to determine the set of basins containing at least one of the neighbouring picture elements $p_j$ of $p_i$ as candidates for a merging operation.

In step 524 it is determined whether the set $BA(p_i)$ is empty. If this is the case the control goes to step 514 to create a new basin with $p_i$ as seed point as there are no basins with which the picture element $p_i$ could be merged.

If the contrary is the case step 526 is carried out to determine the basin $B^*$ of the set $BA(p_i)$ having the highest priority. In this example, priority is defined such that the basin B* having the highest priority is the basin of the set BA $(p_i)$ having the darkest seed point, i.e. the seed point with the lowest grey value.

In step 528 the picture element $p_i$ is merged with the highest priority basin B*. This way the picture element $p_i$ is assigned to the basin B* and forms part of this basin B* from now on.

In step 530 one or more basin-basin merging rules are applied with respect to pairs of basins formed of basins $B_k$ contained in the set $BA(p_i)$ and the highest priority basin B*. Those pairs of basins $B_k$ and B* to which one of the basin-basin merging rules applies are merged, i.e. $B_k$ is merged with B*. In case that more than one basin-basin merging rule is used, in a preferred embodiment of the invention, all basin-basin merging rules have to apply with respect to a pair of such basins as a precondition for merging of the basins. Examples of basin-basin merging rules will be explained in greater detail with respect to Figures 3 and 4.

The index i is incremented in step 516.

After the index i has reached the value n the whole digital image data has been processed and the watershed transformation is complete resulting in one or more basins identified in the original image.

It is to be noted that the above described watershed transformation method in accordance with the invention is particularly advantageous in that it is robust for a large class of different digital image data and also prevents oversegmentation. However, other watershed transformation methods can also be used including watershed transformation methods known from the prior art.

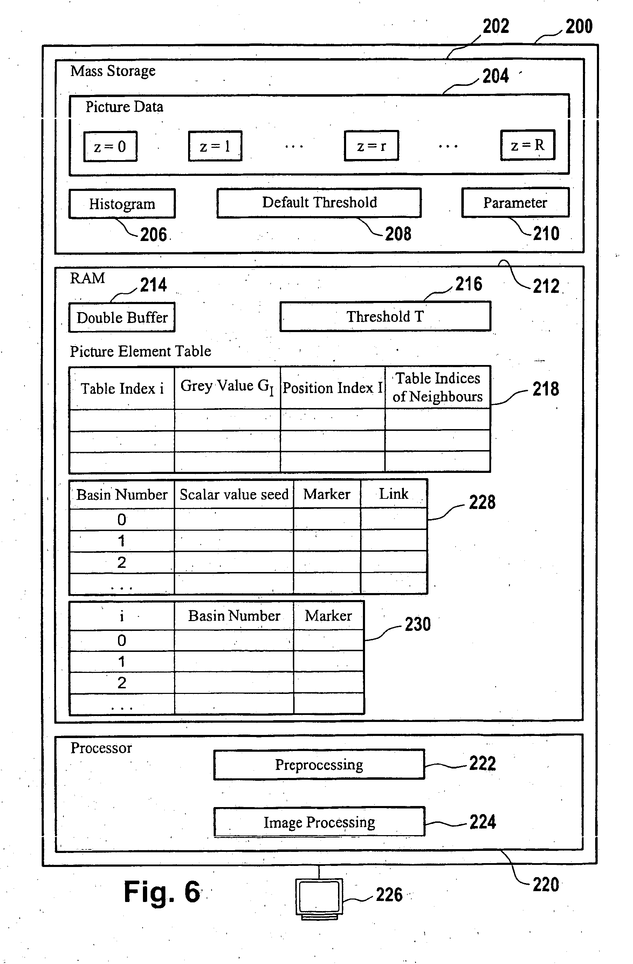

Figure 6 shows the computer system 200 of figure 2 when the image processing program 224 is executed.

The RAM 212 of the computer system 200 is used for storage of a basin list 228. The basin list 228 has four entries per basin. The first entry is the basin number, the second entry is the scalar value of the seed point of this basin, the third value is the marker- if the marker concept is used - and the fourth entry is a link.

Initially the basin list 228 is empty. When the first basin is created in step 514 a corresponding entry is made into the basin list 228. For example, the first basin number is zero.

The scalar value of the seed point $p_i$ is entered as well as the marker value of the seed point $p_i$ - if any. Further a link is entered by entering the basin number "zero", such that the basin with the basin number zero points to itself. For merging this basin with another basin the link is changed to point to the basin number of the basin with which this basin is to be merged.

When the next basin is created in a subsequent step 514 (cf. Figure 5) a consecutive entry in the list stored in basin list 228 is created with a consecutive basin number.

The computer system 200 further contains a list 230 for storing a list of entries for each picture element. This corresponds to step 502 of Figure 5. Each entry in this list contains an indication of the basin number to which a picture element $p_i$ is assigned and its marker value - if any.

Instead of using two entries per picture element it is also possible to use only one entry per picture element in the list 230 if ranges are defined for basin numbers and for marker values. For example, if a first range has been defined for basin numbers and a second range has been defined for markers still the complete information is available:

If the number stored in the list is within the first range, this means that the picture element $p_i$ has already been assigned to a basin. In this case no marker value needs to be given within the list 230 as the marker value for this picture element $p_i$ is the same as the marker value stored in the marker entry of the basin list 228 for the basin to which the

picture element $p_i$ is assigned.

If the value stored in the list belongs to the second range, this implies that the corresponding picture element $p_i$ has not yet being assigned to a basin. When the corresponding picture element $p_i$ is assigned to an existing basin (cf. step 528 of Figure 5) or if a new basin is created with the picture element $p_i$ as seed point (cf: step 514 in Figure 5) the marker value of the picture element $p_i$ is stored in the basin list 228 so that the marker information in the list 230 becomes redundant. This makes it possible to replace the marker information in the list 230 by the basin number to which the picture element $p_i$ is assigned.

The image processing program can comprise a variety of program components for the performance of the watershed transformation method and post-processing of the transformed image data. The monitor 226 can be used for the display of the original image data and / or the results of the watershed transformation and post-processing operations for visualization, segmentation, or quantification.

In operation, a user can interactively mark certain picture elements of the digital image data by clicking on the displayed picture elements on the monitor 226. Alternatively or in addition, automatic marking can be employed.

The lists 228 and 230 are initially empty.

The sequence of picture elements provided by the picture element table 218 is processed starting with picture element $p_0$.

By processing the picture elements $p_i$ a list of basins is created and merging operations between picture elements and basins can take place as reflected by the corresponding list 230 and the link entry of the list 228.

For example, if the basin with the basin number r is to be merged with the basin having the basin number s, this is done by setting the link entry of the basin with the number r to s. In order to determine the basin to which a given picture element $p_i$ belongs it is therefore necessary to use the basin number stored in the list 230 for that picture element $p_i$ as an entry point into the list 228:

If the entry for this basin number in the basin list 228 has a link pointing to the same basin number no further steps need to be performed. If, however, the link points to another basin number, this other basin number needs to be checked for another link and so forth until an entry in the basin list 228 has been identified with a link pointing to itself. This entry identifies the basin to which the picture element $p_i$ actually belongs.

Alternatively it is also possible to update the list 230, i.e. the basin numbers assigned to the picture elements, each time a basin-basin merging takes place. In this case the links of the basin list 228 becomes redundant. Depending on the implementation this requires more processing time in comparison to the first alternative using the links.

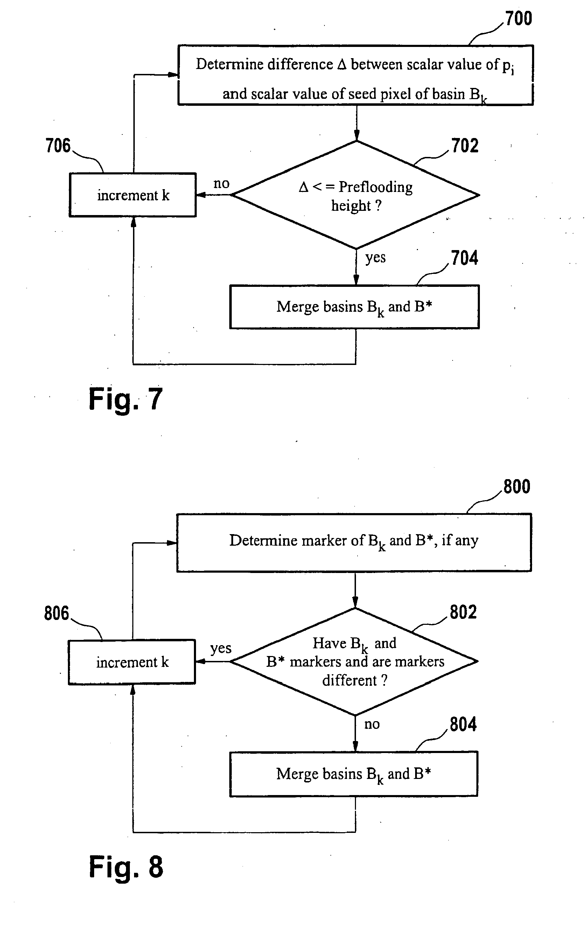

Figure 7 shows an example for a basin-basin merging rule (cf. step 530 of Figure 5) using preflooding.

For example, for application of the basin-basin merging rule depicted in Figure 7, the control goes from step 530 of Figure 1 to step 700 of Figure 7. In step 700 the difference $\Delta$ between the scalar value of the picture element $p_i$ and the scalar value of the seed pixel of the considered basin $B_k$ is determined. In step 702 it is determined whether the difference $\Delta$ is lesser or equal than the preflooding height. The preflooding height is a parameter value which can be selected by the user or which can be set automatically. It is advantageous to set the preflooding height while taking into consideration the nature of the digital image data to be processed.

If the difference $\Delta$ is in fact lesser or equal to the preflooding height the basins $B_k$ and the highest priority basin $B^*$ are merged in step 704. In the computer implementation of Figure 6 this means that the link entry in the list 228 for the basin $B_k$ with the basin number k is set to the basin number of the highest priority basin $B^*$. This way it is not necessary to update the list 230 as the correct assignment of each picture element $p_i$ is properly identified by the link entries.

After step 704 step 706 is performed to increment k in order to test the preflooding basin-basin merging rule with respect to another pair of basins $B_k$ and $B^*$.

If the difference $\Delta$ is greater than the preflooding height no merging of basins takes place and the control goes from step 702 directly to step 706.

Figure 8 shows a marker based basin-basin merging rule which can be employed alternatively or in addition to the preflooding basin-basin merging rule of Figure 7.

For example, the control can go directly form step 530 of Figure 5 to step 800 of Figure 8 or alternatively the control can go to step 800 after the preflooding basin-basin merging rule of Figure 7 has been tested for all relevant pairs of basins.

In step 800 the markers of a pair of basins $B_k$ and the highest priority $B^*$ are determined, if any. In the computer implementation of Figure 6 this can be done by reading the corresponding marker values from the list 228.

In step 802 it is determined whether both basins $B_k$ and $B^*$ have markers and if these markers are different. If this is not the case the control goes to step 804 in order to merge the basins $B_k$ and $B^*$. Again this merging operation can be performed by setting the link entry of the basin $B_k$ in the list 214 (cf. Figure 6) to the basin number of the highest priority basing $B^*$.

Step 806 is performed in order to increment the index k such that the marker based basin-basin merging rule is employed with respect to a consecutive pair of basins $B_k$ and $B^*$.

In case it is determined in step 802 that both basins $B_k$ and $B^*$ have markers and that these markers are different, no basin-basin merging is performed an the control goes directly to step 806.

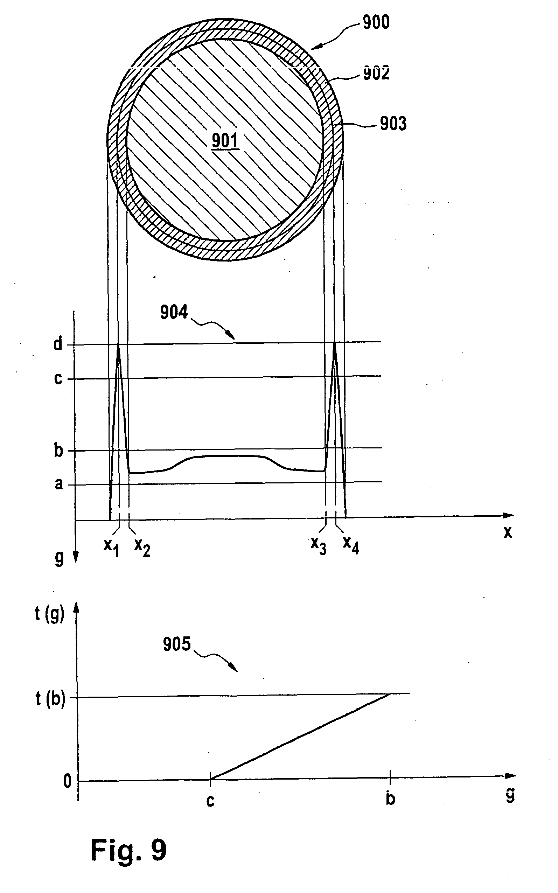

Figure 9 shows a schematic example of an application of the present invention for the purposes of segmentation and visualization.

Figure 9 schematically shows a medical image 900 such as a MR image of the skull. The medical image 900 has a region 901 which shows the brain and a region 902 which surrounds the region 901. The region 902 contains the cranial bone.

The diagram 904 shows the profile of grey values g within the medical image 900 along the x-axis. In this example, the x-axis traverses the centre of the object. With respect to the skull depicted in medical image 900 it is known that the grey values within the region 901 vary between a and b whereas the grey values within the region 902 vary between c and d. Further there are partial volume effects, i.e. picture elements which partly cover tissue types of the regions 501 and 502 and which have therefore grey values g between b and c.

In the example considered here the watershed transformation method of Figure 1 is employed to the medical image 900. This produces a basin which is circumscribed by the crest line 903. This basin contains the entire region 901 and also a part of the region 902. The crest line is formed by connected local maxima of the grey values g of the medical image 900.

For visualization of the region 901 it is desirable to remove the parts of the region 902 within the basin as circumscribed by the crest line 903. This is especially important for three-dimensional or four-dimensional display as in those cases the outer parts of the region 902 within the basin would cover the region 901 which would make the region 901 invisible on the monitor.

To remove those parts of the region 902 a transfer function is utilized. The transfer function 905 serves to transform the opacity of picture elements having grey values g below b. Opacity is the inverse of transparency. An opacity of zero corresponds to total transparency which makes the corresponding picture elements invisible on the monitor.

Those picture elements having grey values below c are made completely transparent in order to make them invisible. Picture elements having grey values between c and b are transformed by applying a linear function to gradually increase the opacity from zero. Picture elements having a grey value of b and greater are not modified and the opacities of those picture elements remain unaltered. In other words, the opacity t(b) of a picture element having a grey value of b remains unchanged as well as the opacities of picture elements having grey values bigger than b.

By applying the transfer function 905 as depicted in Figure 9 picture elements of the basin having grey values between d and c are made completely transparent and thus completely invisible on the monitor whereas the transparency of the picture elements is gradually increased between picture elements having grey values ranging from c to b.

With respect to the diagram 904 this has the following effect: The basin which is limited by the crest line 903 extends between $x_1$ and $x_4$ along the x-axis. Those picture elements of the basin which are located in the border region between $x_1$ and $x_2$ and between $x_3$ and $x_4$ are transformed by means of the transfer function 905 in order to make the region 901 visible for three- or four-dimensional display.

In order to perform this transformation it is advantageous to use the RGBA colour coordinate system as the A-coordinate directly determines the opacity t of a picture element.

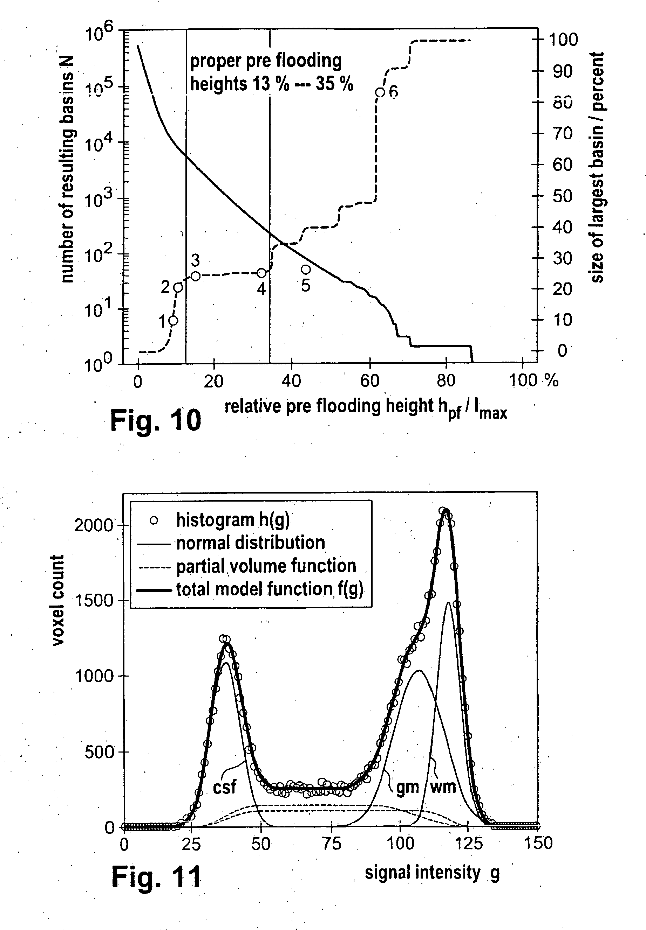

Figure 10 shows the algorithmic behaviour of the watershed transformation method of Figure 5 with increasing preflooding heights. The number of resulting catchment basins is depicted by the solid line and the size of the largest basin by the dashed line.

The modified watershed transformation (WT) included in the present invention is a powerful tool for segmenting the whole brain from MRI datasets. The application to the original MRI data rather than the gradient image is an approach which works excellent for brain segmentation with images showing an intensity characteristic comparable to the MR T1-signal. In particular, it is important that grey matter (GM) is at least as bright as cerebro spinal fluid (CSF) but not brighter than white matter (WM).

Assuming that the brain is surrounded by CSF and all non-brain tissue that needs to be removed shows brighter image intensities than CSF, skull stripping becomes equivalent to isolating a single hill in the four-dimensional landscape. This hill then represents the whole brain including the cerebellum and the spinal cord, as long as they are connected within the image. The valley corresponding to CSF and other low intensity tissue such as bone and meninges will then define the accurate border of the segmentation result.

After the transformation with an appropriate preflooding height one basin should exist that represents the whole brain with all parts that are connected via WM, i.e. cerebellum and spinal cord. This basin usually is the largest existing one, unless the field of view (FOV) has been selected too large. In that case, one could choose the basin containing the centre of FOV or a manually selected basin.

Here the significance of the intensity characteristics of T1-weighting for this approach becomes clearly visible: The connected WM is surrounded by darker GM and even darker CSF, and can thus be regarded as the top of a hill. WM regions may not be connected in 2D, but must be connected in 3D, since the WM is interconnecting all functional parts of the brain. Therefore, a segmentation procedure is preferred that works fully in 3D, rather than 2D techniques that may not account for three-dimensional connectivity (even if they are combined with extrapolation or interpolation techniques).

Figure 11 shows a model based histogram analysis for automatic quantification, such as of CSF volumes. The model comprises three independent Gaussian functions and partial volume functions as will be explained in more detail in the following.

The histogram depicted in Figure 11 relates to a basin as identified as a result of the watershed transformation method, e.g. by employing the method as explained above with respect to Figure 5. With respect to the example considered in Figure 9 this means that the basin contains the region 901 as well as parts of the region 902 surrounding the region 901.

In the case of a brain those regions comprise a variety of tissue types: cerebro spinal fluid (CSF), white matter (WM), grey matter (GM), and possibly veins and bone. To model each of these tissue types a function $\varphi$ is used. The corresponding Gaussian functions for CSF, GM and WM are depicted in the histogram of Figure 11.

In addition a partial volume function $p_{\alpha\beta}$ is used to model the partial volume effects of picture elements covering two different kinds of tissue types. The dashed lines in the histogram of Figure 11 depict two of such partial volume functions by way of example.

Based on the Gaussian functions for the tissue types and the partial volume functions a total fit function $f(g)$ results which is fitted to the actual values of the histogram $h(g)$ in order to determine the parameters $C_\alpha$, $S_\alpha$, $A_\alpha$, $A_{\alpha\beta}$ of the model. The corresponding formulas are given below:

$$\varphi_\alpha(x) = \frac{1}{\sqrt{2\pi}\,s_\alpha} \cdot exp\left\{-\frac{(x-c_\alpha)^2}{2s_\alpha^2}\right\} \tag{1}$$

$$\Phi_\alpha(x) = \int_{x'=-\infty}^{x} \varphi_\alpha(x')\,dx' \tag{2}$$

$$p_{\alpha\beta}(g) = \frac{\Phi_\alpha(g) - \Phi_\beta(g)}{c_\beta - c_\alpha} \tag{3}$$

$$f(g) = \sum_\alpha A_\alpha \cdot \varphi_\alpha(g) + \sum_{\alpha,\beta\,|\,c_\alpha<c_\beta} A_{\alpha\beta} \cdot p_{\alpha\beta}(g) \tag{4}$$

$$E(c_\alpha, s_\alpha, A_\alpha, A_{\alpha\beta}; h(g)) = \sqrt{\frac{1}{|G|} \sum_{g\in G} [f(g) - h(g)]^2} \tag{5}$$

$\alpha,\beta$: tissue types, one of white matter (WM), grey matter (GM), cerebro spinal fluid {CSF), bone, etc.; condition for $\beta$: $C_\beta > C_\alpha$.

$c_\alpha$: mean grey value for tissue type $\alpha$.

$s_\alpha$: width of distribution for tissue type $\alpha$.

$A_\alpha$: number of pixels for tissue type $\alpha$.

$A_{\alpha\beta}$: number of pixels for partial volume distribution of tissue types $\alpha$ and $\beta$.

$\varphi_\alpha(x)$: normal distribution of tissue class $\alpha$.

$\phi_\alpha(x)$: error function (i.e. integral over $\varphi_\alpha(x)$) used as auxiliary function for partial volume approximation.

$P_{\alpha\beta}(g)$: mixed Gaussian used as approximation of partial volume distribution between tissue types $\alpha$ and $\beta$.

$f(g)$: total fit function.

$h(g)$: histogram.

$E$: root mean square deviation of total fit function and histogram that is to be minimized.

Fitting the model function to the discrete histogram function is performed by minimizing mean square deviations, e.g. via a robust simplex algorithm or a gradient-descent algorithm, such as the Marquart-Levenberg algorithm. Good initial values are derived from the two most prominent histogram peaks. Once the fit converges, quantifying the corresponding CSF volume is straightforward. A cut-off value is computed such that 50 % of the partial volume voxels are added to the result. For each individual measure, the expected volumetric uncertainty is calculated based on the image quality, i.e. image noise and non-uniformity, as reflected in the histogram.

In the example considered here three different partial volume functions are used for the partial volumes of CSF, GM; CSF, WM; and GM, WM. The latter is not depicted in Figure 11.

As the Gaussian distribution functions $\varphi_\alpha(x)$ and $\Phi_\alpha(x)$ are normalized the volume of CSF within the considered basin is calculated as $A_{CSF} + 1/2\ A_{CSF,\ GM} + 1/2\ A_{CSF,\ WM}$.

In addition, the remaining differences between the total fit function and the values of the histogram can be taken into account for exact determination of the volume.

A listing of the reference numerals found in the drawings and throughout the specification is now provided.

List of Reference Numerals

| | |
|---|---|
| 100 | Picture Element Dataset |
| 200 | Computer System |
| 202 | Mass Storage Device |
| 204 | Picture Data |
| 206 | Histogram |
| 208 | Default Threshold |
| 210 | Parameter |
| 212 | RAM |
| 214 | Double Buffer |
| 216 | Storage Location |
| 218 | Picture Element Table |
| 220 | Processor |
| 222 | Preprocessing Program |
| 224 | Image Processing Program |
| 226 | Monitor |
| 228 | Basin List |
| 230 | List |
| 900 | Medical Image |
| 901 | Region |
| 902 | Region |
| 903 | Crest Line |
| 904 | Diagram |
| 905 | Transfer Function |

**Claims**

1. A method of processing a digital image being represented by picture element data (100), each picture element data having at least one scalar value, the picture element data being stored on a mass storage device (202), the method comprising:

    - selecting a sub-set of the picture elements using the scalar values as a selection criterion,
    - generating a picture element table (218) comprising a table entry for each picture element of the sub-set, each table entry comprising the scalar value and a table entry field for pointers to the table entries of neighbouring picture elements of the respective picture element, the table being sorted using the scalar values as a sorting criterion and the table being stored in a random access memory (212),
    - performing an image processing step using the picture element table.

2. The method of claim 1, further comprising:

    - providing a histogram (206) of the scalar values,
    - determining a number of the picture elements having scalar values above or below a threshold level using the histogram,

- determining if the random access memory has sufficient memory space for storing the picture element table having the number of table entries, and if this is not the case, incrementing or decrementing the threshold level.

3. The method of claim 1 or 2, further comprising using a double-buffer (214) for successively loading neighbouring layers of the digital image for selecting of the sub-set and for determining the neighbouring picture elements.

4. The method of claim 1, 2 or 3, wherein the image processing step comprises a watershed transformation or a region growing step.

5. The method of any one of the preceding claims, the digital image being a medical image comprising one or more anatomical structures to be segmented.

6. The method of any one of the preceding claims, further comprising:

    - performing a watershed transformation of the digital image by applying a watershed transformation method on the picture element table to provide one or more basins,
    - post-processing of at least one of the basins by processing the picture element data belonging to the at least one of the basins, where the post-processing is selected from the group of post-processing steps consisting of grey-scale based segmentation, visualisation using a transfer function, and volumetry using histogram analysis.

7. The method of claim 6, the digital image comprising a first anatomical structure of a first tissue type having a first range of grey values and a second anatomical structure of a second tissue type having a second range of grey values, whereby the watershed transformation is performed to provide a basin comprising the first anatomical structure and a portion of the second anatomical structure, further comprising the steps of :

    - transforming the picture element data of the basin having grey values within the second range to make these picture elements transparent,
    - applying a transfer function to the picture element data having grey values between the first and the second ranges to gradually increase the transparency of the corresponding picture elements.

8. The method of claim 6 or 7, further comprising:

    - analysing a histogram of the picture element data of at least one of the segments contained on the digital image for quantification purposes,
    - providing a distribution function for each tissue type included within the segment,
    - providing a partial volume function for each pair of tissue types,
    - providing a total fit function based on the distribution functions and the partial volume functions,
    - choosing parameters for the distribution functions and the partial volume functions to approximate the total fit function to the histogram,
    - determining the volume of at least one of the tissue types within the segment by evaluating the parameters of the distribution function of that tissue type and of partial volume functions of pairs of tissue types which comprise that tissue type.

9. A computer system for processing a digital image being represented by picture element data (100), each picture element data having a scalar value, the computer system comprising:

    - a mass storage device (202) for storing the picture element data,
    - a random access memory (212) for successively loading portions of the picture element data for selecting a sub-set of the picture elements using the scalar values as a selection criterion,
    - means (220, 222) for generating a picture element table (218) comprising a table entry for each picture element of the sub-set, each table entry comprising the scalar value and a table entry field for pointers to the table entries of neighbouring picture elements of the respective picture element, the table being sorted using the scalar values as a sorting criterion and the table being stored in the random access memory,
    - means (220, 224) for performing an image processing step using the picture element table.

10. The computer system of claim 9, the random access memory comprising a double buffer (214) for successively loading neighbouring layers of the digital image for selection of the sub-sets and determination of the neighbouring picture elements.

11. A computer program product for processing a digital image being represented by picture element data (100), each picture element data having at least one scalar value, the computer program product comprising computer executable instructions for performing the steps of :

- consecutively loading neighbouring layers of the digital image into a buffer,
- selecting a sub-set of the picture elements of a current layer being loaded in the buffer using the scalar values as a selection criterion,
- generating a table entry for each picture element of the sub-set, each table entry comprising the scalar value and a table entry field for pointers to the table entries of neighbouring picture elements of the respective picture element, the table being sorted using the scalar values as a sorting criterion,
- performing an image processing step using the picture element table.

12. The computer program product of claim 11, each picture element having a picture element data set comprising a position index and further comprising instructions for storing a table index identifier in the picture element data set.

13. The computer program product of claim 11 or 12, the table entry comprising the position index of the respective picture element.

**Patentansprüche**

1. Verfahren zur Verarbeitung eines digitalen Bildes, welches durch Bildelementdaten (100) repräsentiert wird, wobei jede der Bildelementdaten zumindest einen skalaren Wert aufweist, wobei die Bildelementdaten auf einem Massenspeichergerät (202) gespeichert sind, wobei das Verfahren umfasst:

- Auswahl einer Untermenge der Bildelemente unter Verwendung der skalaren Werte aus Auswahlkriterium;
- Erzeugung einer Bildelementtabelle (218), welche einen Tabelleneintrag für jedes Bildelement der Untermenge umfasst, wobei jeder Tabelleneintrag den skalaren Wert und ein Tabelleneintragfeld für Zeiger zu Tabelleneinträgen von benachbarten Bildelementen des entsprechenden Bildelements umfasst, wobei die Tabelle nach den skalaren Werten als Sortierkriterium sortiert ist und wobei die Tabelle in einem Schreib-/Lesespeicher (212) gespeichert ist,
- Durchführung eines Bildverarbeitungsschritts unter Verwendung der Bildelementtabelle.

2. Verfahren nach Anspruch 1, des Weiteren umfassend:

- Bereitstellung eines Histogramms (206) der skalaren Werte,
- Bestimmung einer Anzahl der Bildelemente, welche skalare Werte oberhalb oder unterhalb eines Grenzwerts aufweisen unter Verwendung des Histogramms,
- Bestimmung, ob der Schreib-/Lesespeicher ausreichend Speicherplatz aufweist zur Speicherung der Bildelementtabelle, welche die Anzahl von Tabelleneinträgen enthält und, wenn dies nicht der Fall ist, Erhöhung oder Verringerung des Grenzwerts.

3. Verfahren nach Anspruch 1 oder 2, des Weiteren umfassend einen Doppelpuffer (214), um nacheinander benachbarte Schichten des Digitalbildes zur Auswahl der Untermenge und zur Bestimmung der benachbarten Bildelemente zu laden.

4. Verfahren nach Anspruch 1, 2 oder 3, wobei der Bildverarbeitungsschritt eine Wasserscheidentransformation oder einen Region-Growing-Schritt umfasst.

5. Verfahren nach einem der vorhergehenden Ansprüche, wobei das Digitalbild ein medizinisches Bild ist, welches eine oder mehrere anatomische Strukturen enthält, welche segmentiert werden sollen.

6. Verfahren nach einem der vorhergehenden Ansprüche, weiter umfassend:

- Durchführung einer Wasserscheidentransformation des Digitalbildes durch Anwendung eines Wasserscheidentransformationsverfahrens auf die Bildelementtabelle um eines oder mehrere Bassins bereitzustellen,
- Nachverarbeitung von zumindest einem der Bassins durch Verarbeitung der Bildelementdaten, welche zu dem zumindest einen der Bassins gehören, wobei der Nachverarbeitung aus der Gruppe von Nachverarbeitungsschritten ausgewählt wird, welche aus einer Grau-Skala basierenden Segmentierung, einer Visualisierung unter Verwendung einer Transferfunktion und einer Volumetrie unter Verwendung einer Histogramm-Analyse besteht.

**7.** Verfahren nach Anspruch 6, wobei das Digitalbild eine erste anatomische Struktur einer ersten Gewebeart umfasst, welche einen ersten Grauwertebereich aufweist und eine zweite anatomische Struktur einer zweiten Gewebeart aufweist, welche einen zweiten Grauwertebereich aufweist, wobei die Wasserscheidentransformation durchgeführt wird, um ein Bassin bereitzustellen, welches die erste anatomische Struktur umfasst und welches einen Teil der zweiten anatomischen Struktur umfasst, wobei das Verfahren des weiteren die Schritte umfasst:

- Transformierung der Bildelementdaten des Bassins, welche Grauwerte innerhalb des zweiten Bereichs aufweisen, um diese Bildelemente transparent zu machen,
- Anwenden einer Transferfunktion auf die Bildelementdaten, welche Grauwerte zwischen dem ersten und zweiten Bereich aufweisen, um schrittweise die Transparenz der entsprechenden Bildelemente zu erhöhen.

**8.** Verfahren nach Anspruch 6 oder 7, des Weiteren umfassend:

- Analyse eines Histogramms der Bildelementdaten von zumindest einem der Segmente, welches in dem Digitalbild enthalten ist, zu Quantifizierungszwecken,
- Bereitstellung einer Verteilungsfunktion für jede Gewebeart, welche sich innerhalb des Segments befindet,
- Bereitstellung einer partiellen Volumenfunktion für jedes Paar von Gewebearten,
- Bereitstellung einer gesamten Anpassungsfunktion basierend auf den Verteilungsfunktionen und den partiellen Volumenfunktionen,
- Auswahl von Parametern für die Verteilungsfunktionen und partiellen Volumenfunktionen um die gesamte Anpassungsfunktion dem Histogramm anzunähern,
- Bestimmung des Volumens von zumindest einer der Gewebearten innerhalb des Segments durch Evaluierung der Parameter der Verteilungsfunktion dieses Gewebetyps und von partiellen Volumenfunktion von Paaren von Gewebearten, welche diese Gewebeart umfassen.

**9.** Computersystem zur Verarbeitung eines Digitalbildes, welches durch Bildelementdaten (100) repräsentiert wird, wobei jede der Bildelementdaten einen skalaren Wert aufweist, wobei das Computersystem umfasst:

- ein Massespeichergerät (202) zur Speicherung der Bildelementdaten,
- ein Schreib-/Lesespeicher (212), um nacheinander Teile der Bildelementdaten zur Auswahl einer Untermenge der Bildelemente unter Verwendung der skalaren Werte als Auswahlkriterium zu laden,
- Mittel (220, 222) zur Erzeugung einer Bildelementtabelle (218), welche einen Tabelleneintrag für jedes Bildelement der Untermenge enthält, wobei jeder Tabelleneintrag den skalaren Wert und ein Tabelleneintragsfeld für die Zeiger auf die Tabelleneinträge von benachbarten Bildelementen des entsprechenden Bildelementes enthält, wobei die Tabelle nach den skalaren Werten als Sortierkriterium sortiert ist und wobei die Tabelle in dem Schreib-/Lesespeicher gespeichert ist,
- Mittel (220, 224) zur Durchführung eines Bildverarbeitungsschrittes unter Verwendung der Bildelementtabelle.

**10.** Computersystem nach Anspruch 9, wobei der Schreib-/Lesespeicher einen Doppelpuffer (214) umfasst, um nacheinander benachbarte Schichten des Digitalbildes zur Auswahl der Untersätze und Bestimmung der benachbarten Bildelemente zu laden.

**11.** Computerprogrammprodukt zur Verarbeitung eines Digitalbildes, welches durch Bildelementdaten (100) repräsentiert wird, wobei jede der Bildelementdaten zumindest einen skalaren Wert aufweist, wobei das Computerprogrammprodukt von einem Computer ausführbare Instruktionen enthält zur Durchführung der folgenden Schritte:

- nacheinander Laden von benachbarten Schichten des Digitalbildes in einen Puffer,
- Auswahl einer Untermenge der Bildelemente einer aktuellen Schicht, welche in den Puffer geladen ist unter Verwendung der skalaren Werte als Auswahlkriterium,
- Erzeugung eines Tabelleneintrages für jedes Bildelement der Untermenge, wobei jeder Tabelleneintrag den skalaren Wert und ein Tabelleneintragsfeld für Zeiger zu den Tabelleneinträgen von benachbarten Bildelementen des entsprechenden Bildelementes enthält, wobei die Tabelle nach den skalaren Werten als Sortierkriterium sortiert ist,
- Durchführung eines Bildverarbeitungsschrittes unter Verwendung der Bildelementtabelle.

**12.** Computerprogrammprodukt nach Anspruch 11, wobei jedes Bildelement einen Bildelementdatensatz aufweist, welcher einen Positionsindex und des weiteren Anweisungen zur Speicherung eines Tabellenindex-Kennzeichners in dem Bildelementdatensatz umfasst.

**13.** Computerprogrammprodukt nach Anspruch 11 oder 12, wobei der Tabelleneintrag den Positionsindex des entsprechenden Bildelementes umfasst.

**Revendications**

**1.** Procédé de traitement d'une image numérique étant représentée par des données pixels (100), chaque donnée pixel ayant au moins une valeur scalaire, les données pixels étant stockées sur un dispositif de stockage de grande capacité (202), le procédé comprenant :

    - sélectionner un sous-ensemble des pixels en utilisant les valeurs scalaires comme critère de sélection,
    - générer un tableau de pixels (218) comprenant une entrée de tableau pour chaque pixel du sous-ensemble, chaque entrée de tableau comprenant la valeur scalaire et un champ d'entrée de tableau pour les pointeurs vers les entrées de tableau de pixels de voisinage du pixel respectif, le tableau étant trié en utilisant les valeurs scalaires comme critère de tri et le tableau étant stocké dans une mémoire à accès aléatoire (212),
    - effectuer une étape de traitement d'image en utilisant le tableau de pixels.

**2.** Procédé de la revendication 1, comprenant de plus :

    - fournir un histogramme (206) des valeurs scalaires,
    - déterminer un certain nombre des pixels ayant des valeurs scalaires au-dessus ou en dessous d'un niveau de seuil à l'aide de l'histogramme,
    - déterminer si la mémoire à accès aléatoire a suffisamment d'espace de mémoire pour stocker le tableau de pixels ayant le nombre d'entrées de tableau, et si ce n'est pas le cas, incrémenter ou décrémenter le niveau de seuil.

**3.** Procédé de la revendication 1 ou 2, comprenant de plus utiliser un double tampon (214) pour charger successivement des couches de voisinage de l'image numérique pour sélectionner le sous-ensemble et pour déterminer les pixels de voisinage.

**4.** Procédé de la revendication 1, 2 ou 3, dans lequel l'étape de traitement d'image comprend une étape de transformation par ligne de partage des eaux ou une étape de croissance de région.

**5.** Procédé de n'importe laquelle des revendications précédentes, l'image numérique étant une image médicale comprenant une ou plusieurs structures anatomiques à segmenter.

**6.** Procédé de n'importe laquelle des revendications précédentes, comprenant de plus :

    - effectuer une transformation par ligne de partage des eaux de l'image numérique en appliquant un procédé de transformation par ligne de partage des eaux sur le tableau de pixels pour fournir un ou plusieurs bassins,
    - post-traiter au moins un des bassins en traitant les données pixels appartenant à ce au moins un des bassins, où le post-traitement est sélectionné dans le groupe d'étapes post-traitement consistant en segmentation basée sur l'échelle de gris, visualisation utilisant une fonction de transfert, et volumétrie utilisant l'analyse d'histogramme.

**7.** Procédé de la revendication 6, l'image numérique comprenant une première structure anatomique d'un premier type de tissu ayant une première gamme de valeurs de gris et une deuxième structure anatomique d'un deuxième type de tissu ayant une deuxième gamme de valeurs de gris, par lequel la transformation par ligne de partage des eaux est effectuée pour fournir un bassin comprenant la première structure anatomique et une portion de la deuxième structure anatomique, comprenant de plus les étapes consistant à :

    - transformer les données pixels du bassin ayant des valeurs de gris dans la deuxième gamme pour rendre ces pixels transparents,
    - appliquer une fonction de transfert aux données pixels ayant des valeurs de gris entre la première et la deuxième gammes pour augmenter de façon progressive la transparence des pixels correspondants.

8. Procédé de la revendication 6 ou 7, comprenant de plus :

- analyser un histogramme des données pixels d'au moins un des segments contenus sur l'image numérique à des fins de quantification,
- fournir une fonction de distribution pour chaque type de tissu inclus dans le segment,
- fournir une fonction de volume partiel pour chaque paire de types de tissu,
- fournir une fonction d'ajustement total basée sur les fonctions de distribution et les fonctions de volume partiel,
- choisir des paramètres pour les fonctions de distribution et les fonctions de volume partiel pour approximer la fonction d'ajustement total à l'histogramme,
- déterminer le volume d'au moins un des types de tissu dans le segment en évaluant les paramètres de la fonction de distribution de ce type de tissu et de fonctions de volume partiel de paires de types de tissu qui comportent ce type de tissu.

9. Système informatique pour le traitement d'une image numérique étant représentée par des données pixels (100), chaque donnée pixel ayant une valeur scalaire, le système informatique comprenant :

- un dispositif de stockage de grande capacité (202) pour stocker les données pixels,
- une mémoire à accès aléatoire (212) pour charger successivement des portions des données pixels pour sélectionner un sous-ensemble des pixels en utilisant les valeurs scalaires comme critère de sélection,
- des moyens (220, 222) pour générer un tableau de pixels (218) comprenant une entrée de tableau pour chaque pixel du sous-ensemble, chaque entrée de tableau comprenant la valeur scalaire et un champ d'entrée de tableau pour les pointeurs vers les entrées de tableau de pixels de voisinage du pixel respectif, le tableau étant trié en utilisant les valeurs scalaires comme critère de tri et le tableau étant stocké dans la mémoire à accès aléatoire,
- des moyens (220, 224) pour effectuer une étape de traitement d'image en utilisant le tableau de pixels.

10. Système informatique de la revendication 9, la mémoire à accès aléatoire comprenant un double tampon (214) pour charger successivement des couches de voisinage de l'image numérique pour la sélection des sous-ensembles et la détermination des pixels de voisinage.

11. Produit de programme informatique pour le traitement d'une image numérique étant représentée par des données pixels (100), chaque donnée pixel ayant au moins une valeur scalaire, le produit de programme informatique comprenant des instructions exécutables informatiquement pour effectuer les étapes consistant à :

- charger consécutivement des couches de voisinage de l'image numérique dans un tampon,
- sélectionner un sous-ensemble des pixels d'une couche actuelle en cours de chargement dans le tampon en utilisant les valeurs scalaires comme critère de sélection,
- générer une entrée de tableau pour chaque pixel du sous-ensemble, chaque entrée de tableau comprenant la valeur scalaire et un champ d'entrée de tableau pour les pointeurs vers les entrées de tableau de pixels de voisinage du pixel respectif, le tableau étant trié en utilisant les valeurs scalaires comme critère de tri,
- effectuer une étape de traitement d'image en utilisant le tableau de pixels.

12. Produit de programme informatique de la revendication 11, chaque pixel ayant un ensemble de données pixels comprenant un indice de position et comprenant de plus des instructions pour le stockage d'un identifiant d'indice de tableau dans l'ensemble de données pixels.

13. Produit de programme informatique de la revendication 11 ou 12, l'entrée de tableau comprenant l'indice de position du pixel respectif.

Picture element

| Coordinates : | Position Index I : | Grey Value : | Table Index Identifier TI : |
|---|---|---|---|
| $x = p$ <br> $y = q$ <br> $z = r$ | $I = x + y * P + z\,(P*Q)$ | $g_I$ | $TI = \begin{cases} 0 & (\text{ initial Value }) \\ -1 & (\text{ if Grey Value } g_I < T ) \\ i & (\text{ iindex in picture element table }) \end{cases}$ |

**Fig. 1**

Mass Storage — 202 — 200

Picture Data — 204

z = 0    z = 1   ...   z = r   ...   z = R-1

Histogram — 206    Default Threshold — 208    Parameter — 210

RAM — 212 — 214

Double Buffer

z = r-1    z = r

Threshold T — 216

Picture Element Table

| Table Index i | Grey Value $G_I$ | Position Index I | Table Indices of Neighbours | |
|---|---|---|---|---|
| | | | | — 218 |
| | | | | |
| | | | | |

Processor

Preprocessing — 222

Image Processing — 224

**Fig. 2**    226    220

Read Histogram, default threshold value, parameter — 300

Threshold T = default threshold value — 302

Determine number of AT of picture elements having a grey value above T — 304

Memory Requirement = AT * Paramenter — 306

Memory Requirement <= Free RAM ? — 308

T = T + Increment — 310

no

yes

Store T — 312

# Fig. 3

**Fig. 4**

Generate entry for each picture element:
(pointer to basin, marker value);
Initialize values of pointer to basin and marker value — **500**

Access sorted table with picture elements $p_0, p_I, \cdots p_i, \cdots p_{n-1}$ — **502**

i = 0 — **504**

Determine a set N ($p_i$) containing picture elements $p_j$ which are
- neighbours of $p_j$ and
- for which j < i. — **510**

Determine set BA ($p_i$) of basins
containing basins B($p_j$)
- having one of the picture elements $p_j$ and
- if $p_i$ has a marker, having no marker
  or the same marker as $p_i$ — **522**

**512**
N ($p_i$) empty ?   no →

yes

Create new basin
with $p_i$ as seed point — **514**

**524**
yes ← BA ($p_i$) empty ?

increment i — **516**

no

**518**
i = n ?

no

yes

Processing of transformed image — **520**

Determine B* of BA ($p_i$)
having highest priority — **526**

Merge $p_i$ and B* — **528**

Test basin-basin merging rule(s) with respect
to pairs of basins $B_k$ of BA ($p_i$) and B*;
merge basins $B_k$ and B* to which rule applies — **530**

# Fig. 5

**Mass Storage** _204_ _202_ _200_

Picture Data

| z = 0 | z = 1 | ··· | z = r | ··· | z = R |

| Histogram | Default Threshold | Parameter |

_206_ _208_ _210_

**RAM** _214_ _216_ _212_

| Double Buffer | Threshold T |

Picture Element Table

| Table Index i | Grey Value $G_I$ | Position Index I | Table Indices of Neighbours | _218_ |
|---|---|---|---|---|
| | | | | |
| | | | | |
| | | | | |

| Basin Number | Scalar value seed | Marker | Link | _228_ |
|---|---|---|---|---|
| 0 | | | | |
| 1 | | | | |
| 2 | | | | |
| ... | | | | |

| i | Basin Number | Marker | _230_ |
|---|---|---|---|
| 0 | | | |
| 1 | | | |
| 2 | | | |
| ... | | | |

**Processor**

| Preprocessing | _222_ |

| Image Processing | _224_ |

_220_

# Fig. 6

_226_

700

Determine difference $\Delta$ between scalar value of $p_i$ and scalar value of seed pixel of basin $B_k$

702

$\Delta <=$ Preflooding height ?

706

no → increment k

yes

704

Merge basins $B_k$ and B*

## Fig. 7

800

Determine marker of $B_k$ and B*, if any

802

806

Have $B_k$ and B* markers and are markers different ?

yes → increment k

no

804

Merge basins $B_k$ and B*

## Fig. 8

**Fig. 9**

**Fig. 10**

proper pre flooding heights 13 % --- 35 %

number of resulting basins N

size of largest basin / percent

relative pre flooding height $h_{pf}$ / $I_{max}$

**Fig. 11**

- ○ histogram h(g)
- —— normal distribution
- ------ partial volume function
- ▬▬ total model function f(g)

voxel count

csf

gm wm

signal intensity g

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030068074 A1

- US 6985612 B

**Non-patent literature cited in the description**

- **ALYASSIN AM ; AVINASH GB.** Semiautomatic bone removal technique from CT angiography data. *In: Medical Imaging: Image Processing, Proc. SPIE,* 2001, vol. 4322, 1273-1283
- **FIEBICH M ; STRAUS CM ; SEHGAL V ; RENGER BC ; DOI K ; HOFFMANN KR.** Automatic bone segmentation technique for CT angiographic studies. *J Comput Assist Tomogr,* January 1999, vol. 23 (1), 155-161

- **MOORE EA ; GRIEVE JP ; JÄGER HR.** Robust processing of intracranial CT angiograms for 3D volume rendering. *European Radiology,* January 2001, vol. 11 (1), 137-141
- **KANG Y ; ENGELKE K ; KALENDER WA.** A new accurate and precise 3-D segmentation method for skeletal structures in volumetric CT data. *IEEE Trans Med Imaging,* May 2003, vol. 22 (5), 586-598